# EUROPEAN PATENT APPLICATION

(11) **EP 4 378 596 A1**
(43) Date of publication of application: **05.06.2024**
(21) Application number: 22849208.8
(22) Date of filing: 08.07.2022
(51) Int. Cl.: B05D 7/00

(54) **REFERENCE SAMPLE FOR COATING DEFECTS AND METHOD FOR PRODUCING SAME**

(30) Priority: 26.07.2021 JP 2021121485
(71) Applicant: KONICA MINOLTA, INC., Tokyo 100-7015 (JP)
(72) Inventor: YOSHIDA, Ryuichi, Tokyo 100-7015 (JP)
(74) Representative: MFG Patentanwälte Meyer-Wildhagen Meggle-Freund Gerhard PartG mbB
(86) International application number: PCT/JP2022/027087
(87) International publication number: WO 2023/008143

(57) **Abstract**

A reference sample (1) for coating defects, including a substrate (10)(20) that has a surface on which one or a plurality of pseudo defective portions (11)(21) having a convex and/or concave shape are formed; and a coating film layer (12)(22) that is formed to cover at least the pseudo defective portion (11)(21) and a peripheral portion of the pseudo defective portion (11)(21).

## Description

### Technical Field

The present invention relates to a reference sample for coating defects that is used for evaluating the size or other properties of a convex and/or concave coating defect generated on a coated surface of a product such as an automobile, and a method for producing the same.

### Background Art

The surface of a product is often painted to improve the reliability of the product and to improve the design. Then, foreign matters such as dust floating in the air may lie on the surface to be coated and the surface may be coated thereon, whereby a convex coating defect called a lump is generated on the coated surface, which may deteriorate the design quality of the product. Moreover, when oil adheres on the coated surface and coating is performed thereon, the coating is not deposited, resulting in a concave defect.

In terms of design, the non-defective product limit of a convex or concave coating defect is often defined by the size of the defect diameter through visual observation. It is desirable to clean the environment of the production process and eliminate foreign matters so that a convex or concave coating defect does not occur, but foreign matters having a size to a certain extent are allowed in relation to the countermeasure cost. Therefore, foreign matters such as mechanical dust and sebum from a human body are generated to some extent. Certain convex or concave defects due to these foreign matters occur in the production process. The size of the diameter of the coating defect is determined from the size of the foreign matter, the adhesion amount of the oil, the viscosity of the coating material, and the like, and is widely distributed in a range of about 0.2 mm to 2.0 mm. The inspection conforming to the non-defective product standard corresponding to the grade of the product is performed on the coating defect thus occurred, and the defect having a size equal to or larger than the standard is repaired.

Conventionally, as a means for measuring the size of such a convex or concave coating defect occurred on the coated surface, a dot gauge displaying a large number of black circles of different sizes is simply used, and the quality control is performed by comparing the size of the coating defect with the black circle of the dot gauge.

In addition, Patent Literature 1 discloses a technique for calibrating the scratch detection capability of a scattered light detection device in semiconductor inspection by quantifying the depth and width of the scratch with a standard sample of a pseudo processing trace formed by a processing method such as an ion beam, in order to improve a product yield by quantitatively inspecting the depth and width of a scratch and providing feedback to a semiconductor device manufacturing process.

### Citation List

### Patent Literature

Patent Literature 1: JP 2000-58606 A

### Summary of Invention

### Technical Problem

However, the convex shape and the concave shape on the coated surface are three-dimensional shapes, and their appearance depends on the inclination angle of the defect and the illumination. Therefore, the dot gauge has not been sufficient to perform proper evaluation.

In addition, the technique of Patent Literature 1 evaluates the scratch generated in a semiconductor device manufacturing process, and the application to the evaluation of coating defects has not been possible.

The present invention has been made in view of such a technical background, and aims at providing a reference sample for coating defects that is capable of properly evaluating the size or other properties of a convex or concave coating defect generated on a coated surface of a defect evaluation target such as a product, and a method for producing the same.

### Solution to Problem

The above object is achieved by the following means.
(1) A reference sample for coating defects, including: a substrate that has a surface on which one or a plurality of pseudo defective portions having a convex and/or concave shape are formed; and a coating film layer that is formed to cover at least the pseudo defective portion and a peripheral portion of the pseudo defective portion.
(2) The reference sample for coating defects according to the above item (1), in which the coating film layer is formed of a coating material same as a coating material used for a defect evaluation target.
(3) The reference sample for coating defects according to the above item (1), in which color of the coating film layer is same as color of a coating material used for a defect evaluation target.
(4) The reference sample for coating defects according to any one of the above items (1) to (3), in which the pseudo defective portion includes a plurality of pseudo defective portions for which at least one of a diameter, a height and/or a depth, and an inclination angle in plan view is different.
(5) The reference sample for coating defects according to the above item (4), in which at least one of a diameter, a height and/or a depth, and an inclination angle in plan view is changed in a geometric progression manner among the plurality of pseudo defective portions.
(6) The reference sample for coating defects according to any one of the above items (1) to (5), in which a defective region of the pseudo defective portion is determined based on an inclination angle in a section of the pseudo defective portion.
(7) The reference sample for coating defects according to the above item (6), in which, in a section of the pseudo defective portion having a convex shape, a protruding portion with a boundary on which an absolute value of inclination angle is 0.5 degrees is defined as a defective region, and in a section of the pseudo defective portion having a concave shape, a recessed portion with a boundary on which an absolute value of inclination angle is 0.5 degrees is defined as a defective region.
(8) A method for producing a reference sample for coating defects, including: producing a substrate that has a surface on which one or a plurality of pseudo defective portions having a convex and/or concave shape are formed; and coating at least the pseudo defective portion and a peripheral portion of the pseudo defective portion.
(9) The method for producing a reference sample for coating defects according to the above item (8), in which the pseudo defective portion is formed by machining the substrate.
(10) The method for producing a reference sample for coating defects according to the above item (9), in which the pseudo defective portion is processed by moving a tool linearly and by moving the tool in a direction parallel to a previous moving direction when the tool is shifted to a next processing position.
(11) The method for producing a reference sample for coating defects according to the above item (8), in which a resin substrate that has a surface on which one or a plurality of pseudo defective portions having a convex and/or concave shape are formed is produced by resin molding using a mold that has a surface on which one or a plurality of concave and/or convex portions for forming a pseudo defect.

### Advantageous Effects of Invention

In the invention according to the above item (1), the reference sample for coating defects includes: a substrate that has a surface on which one or a plurality of pseudo defective portions having a convex and/or concave shape are formed; and a coating film layer that is formed to cover at least the pseudo defective portion and a peripheral portion of the pseudo defective portion. Thus, the pseudo defective portion covered with the coating film layer has the same appearance as the convex or concave coating defect generated on the surface of the defect evaluation target such as a coated product, and the size or other properties of the coating defect of the defect evaluation target can be easily and appropriately evaluated by comparison with the reference sample for coating defects.

In the invention according to the above item (2), the coating film layer is formed of a coating material same as a coating material used for a defect evaluation target. Thus, the size or other properties of the coating defect of the defect evaluation target can be evaluated more accurately.

In the invention according to the above item (3), the color of a coating film layer is same as color of a coating material used for a defect evaluation target. Thus, the size or other properties of the coating defect of the defect evaluation target can be evaluated more accurately.

In the invention according to the above item (4), the pseudo defective portion includes a plurality of pseudo defective portions for which at least one of a diameter, a height and/or a depth, and an inclination angle in plan view is different. Thus, even if the sizes or the like of the coating defects of the defect evaluation target are variously different, the coating defects can be evaluated by one reference sample for coating defects.

In the invention according to the above item (5), at least one of the diameter, the height and/or the depth, and the inclination angle in plan view is changed in a geometric progression manner among the plurality of pseudo defective portions, which allows a person to visually distinguish the difference among the pseudo defective portions easily. Thus, it is possible to accurately evaluate the size or other properties of the coating defect of the defect evaluation target by comparison with the pseudo defective portion.

In the invention according to the above item (6), the defective region of the pseudo defective portion is determined based on the inclination angle in the section of the pseudo defective portion. Thus, the size of the pseudo defective portion can be scaled to the human visual observation reference.

In the invention according to the above item (7), in a section of the pseudo defective portion having a convex shape, a protruding portion with a boundary on which an absolute value of inclination angle is 0.5 degrees is defined as a defective region, and in a section of the pseudo defective portion having a concave shape, a recessed portion with a boundary on which an absolute value of inclination angle is 0.5 degrees is defined as a defective region. Thus, the size of the pseudo defective portion can be accurately scaled to the human visual observation reference.

In the invention according to the above item (8), it is possible to produce a reference sample for coating defects, the reference sample including a substrate that has a surface on which one or a plurality of pseudo defective portions having a convex and/or concave shape are formed, and a coating film layer that is formed to cover at least the pseudo defective portion and a peripheral portion of the pseudo defective portion.

In the invention according to the above item (9), the pseudo defective portion can be formed easily by machining the substrate.

In the invention according to the above item (10), the pseudo defective portion is processed by moving the tool such that the moving direction of the tool is linear and parallel. Thus, the pseudo defective portion can be formed without leaving a processing trace, and in particular, the boundary portion between the pseudo defective portion and the peripheral portion can be smoothly processed.

In the invention according to the above item (11), a resin substrate that has a surface on which one or a plurality of pseudo defective portions having a convex and/or concave shape are formed can be produced by resin molding using a mold that has a surface on which one or a plurality of concave and/or convex portions for forming a pseudo defect.

### Brief Description of Drawings

Fig. 1(A) is a plan view of a substrate used in a reference sample for coating defects according to an embodiment of the present invention, Fig. 1(B) is a plan view of one pseudo defective portion formed on the substrate, and Fig. 1(C) is a sectional view of one pseudo defective portion.
Fig. 2(A) is a sectional view of the substrate of Fig. 1(A) taken along line IIA-IIA, and Fig. 2(B) is a sectional view of the substrate of Fig. 1(A) taken along line IIB-IIB.
Fig. 3 is a sectional view of a reference sample for coating defects according to the embodiment of the present invention using the substrate of Fig. 1.
Fig. 4(A) is a plan view of a substrate used in a reference sample for coating defects according to another embodiment of the present invention, Fig. 4(B) is a plan view of one pseudo defective portion formed on the substrate, and Fig. 4(C) is a sectional view of one pseudo defective portion.
Fig. 5(A) is a sectional view of the substrate of Fig. 4(A) taken along line IIA-IIA, and Fig. 5(B) is a sectional view of the substrate of Fig. 4(A) taken along line IIB-IIB.
Fig. 6 is a sectional view of a reference sample for coating defects according to another embodiment of the present invention using the substrate of Fig. 4.
Figs. 7(A) and 7(B) are views for explaining one method of producing a substrate.
Fig. 8(A) is a graph representing an outline of a vertical section of a certain convex defect, and Fig. 8(B) is a graph representing an inclination angle (inclination) of each portion of the outline of Fig. 8(A).
Fig. 9 is a graph representing a comparison between a size of a defect defined by an inclination angle and a size of a defect based on a visual observation reference.
Fig. 10 is a graph formed by examining the change in degree of coincidence with a visual observation reference when the inclination is changed in a range of ±0.2 deg to ±2 deg.

### Description of Embodiments

Hereinafter, embodiments of the present invention will be described with reference to the drawings.

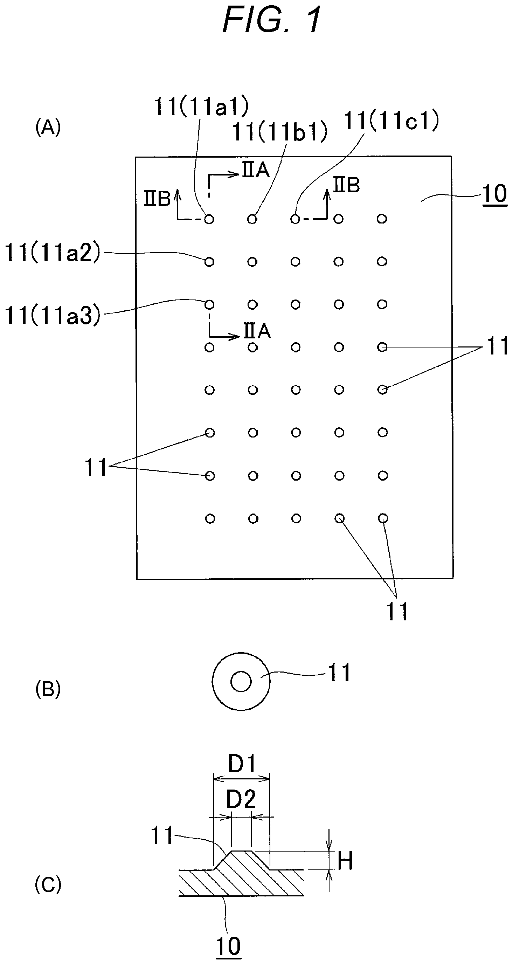

Fig. 1(A) is a plan view of a substrate 10 used in a reference sample for coating defects (hereinafter, may be simply referred to as a reference sample) according to an embodiment of the present invention, Fig. 1(B) is a plan view of one pseudo defective portion 11 formed on the substrate 10, and Fig. 1(C) is a sectional view of one pseudo defective portion 11.

The substrate 10 illustrated in Fig. 1 has a thickness of, for example, about 2 mm, and on one surface of the substrate 10, a plurality of convex pseudo defective portions 11 are formed integrally with the substrate 10 and aligned vertically and horizontally at intervals. As illustrated in Figs. 1(B) and 1(C), the pseudo defective portion 11 is formed in a truncated cone shape in which a bottom diameter (lower diameter) D1 is larger than a top diameter (upper diameter) D2. Note that the shape of the convex portion of the pseudo defective portion 11 is not limited to the truncated cone shape, and may be a conical shape, a cylindrical shape, a truncated pyramid shape, a pyramid shape, a prism shape, or the like. However, the truncated cone shape, which is more similar in appearance to a convex coating defect of a defect evaluation target that is a product subjected to defect evaluation such as an automobile, is desirable.

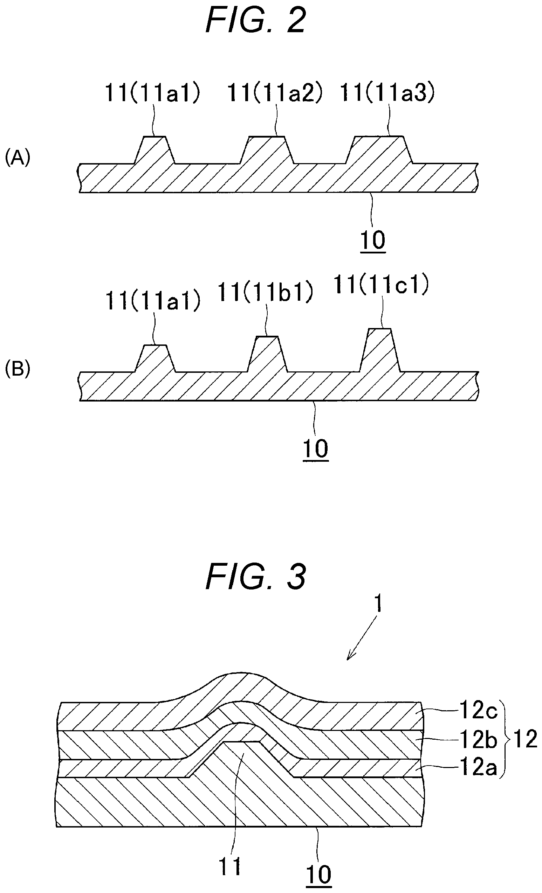

Fig. 2(A) is a sectional view of the substrate 10 of Fig. 1(A) taken along line IIA-IIA, and Fig. 2(B) is a sectional view of the substrate 10 of Fig. 1(A) taken along line IIB-IIB. In the present embodiment, as illustrated in Fig. 2(A), the pseudo defective portions 11 (for example, pseudo defective portions 11a1, 11a2, 11a3 ......) in a column (a row in the vertical direction in Fig. 1(A)) have the lower diameter D1 and the upper diameter D2 each increased from the distal end side (the upper side in Fig. 1(A)) toward the terminal end side (the lower side in Fig. 1(A)) in the column, while the maximum height H of the pseudo defective portions 11 is constant. On the other hand, as illustrated in Fig. 2(B), the pseudo defective portions 11 (for example, pseudo defective portions 11a1, 11b1, 11c1 ......) in a row (a row in the right-left direction in Fig. 1(A)) have the constant lower diameter D1 and upper diameter D2, while the height H of the pseudo defective portions 11 is increased from the distal end side (the left side in Fig. 1(A)) toward the terminal end side (the right side in Fig. 1(A)) in the row.

Table 1 represents examples of dimensions of the lower diameter D1, the upper diameter D2, and the height H of the pseudo defective portion 11. In Table 1, 1 to 8 are row numbers, and are assigned in order from 1 from the upper side to the lower side in Fig. 1(A). Moreover, 'a' to `e' are column signs, and are assigned in order from a from the left side to the right side in Fig. 1(A).

**[Table 1]**

| | Lower diameter D1 (mm) | Upper diameter D2 (mm) | | Maximum height H (mm) | |
|---|---|---|---|---|---|
| 1 | 0.300 | 0.038 | | a | 0.020 |
| 2 | 0.393 | 0.049 | | b | 0.030 |
| 3 | 0.516 | 0.054 | | c | 0.045 |
| 4 | 0.676 | 0.085 | | d | 0.067 |
| 5 | 0.887 | 0.111 | | e | 0.100 |
| 6 | 1.163 | 0.145 | | | |
| 7 | 1.525 | 0.191 | | | |
| 8 | 2.000 | 0.250 | | | |

As understood from Table 1 above, the lower diameter D1 and the upper diameter D2 of the pseudo defective portions 11 in the column and the maximum height H of the pseudo defective portions 11 in the row are all changed in a geometric progression manner. The change in a geometric progression manner allows a person to visually distinguish the difference among the pseudo defective portions 11 easily. As a result, with the comparison of the convex coating defect of the defect evaluation target with the pseudo defective portion 11 of the reference sample 1, it is possible to accurately evaluate the size or other properties of the convex coating defect occurred on the surface of the defect evaluation target.

Note that at least one of the lower diameter D1, the upper diameter D2, and the maximum height H may be changed in a geometric progression manner. Alternatively, the inclination angle of the slope of the pseudo defective portion 11 may be changed in a geometric progression manner.

The entire surface where the pseudo defective portion 11 is formed in the substrate 10 illustrated in Fig. 1 and Fig. 2 is coated, and as illustrated in Fig. 3, a coating film layer 12 covering the entire surface of one surface of the substrate 10 is formed.

In this embodiment, the coating film layer 12 has a three-layer structure of a primer layer 12a, a base layer 12b, and a clear layer 12c in order from the substrate 10 side.

It is desirable that the coating film layer 12 is formed under the same coating conditions as those of the defect evaluation target in the point that the defect evaluation with high accuracy is possible with the same appearance as that of the defect evaluation target. Specifically, it is desirable that the paint used, the layer structure, the color, the thickness, and the like are the same as those of the defect evaluation target.

Note that the coating film layer 12 does not need to be formed on the entire surface of the substrate 10, and may be formed at least on the pseudo defective portion 11 and the peripheral portion thereof, but is preferably formed on the entire surface of the substrate 10 from the viewpoint of facilitating the coating operation.

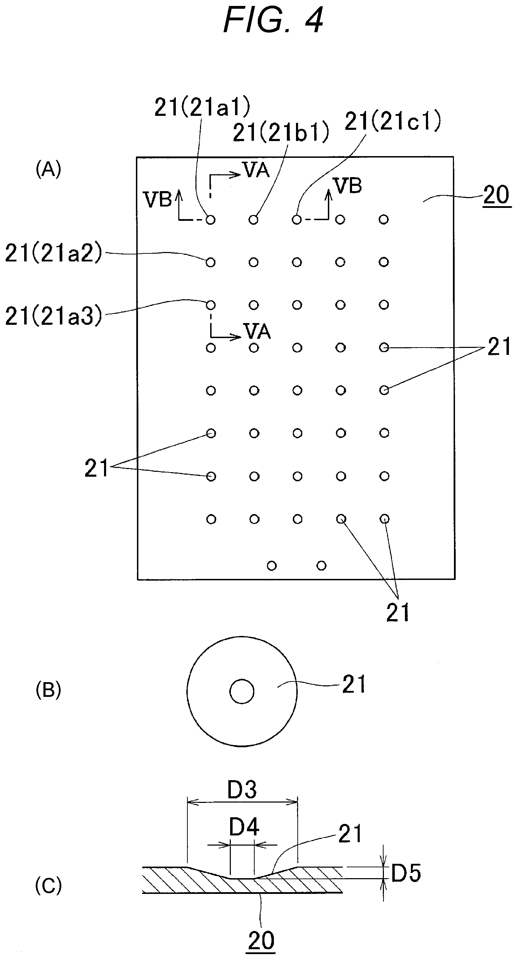

Fig. 4(A) is a plan view of a substrate 20 used in the reference sample 1 according to another embodiment of the present invention, Fig. 4(B) is a plan view of one pseudo defective portion 21 formed on the substrate 20, and Fig. 4(C) is a sectional view of one pseudo defective portion 21.

The substrate 20 illustrated in Fig. 4 has a thickness of, for example, about 2 mm, and on one surface of the substrate 20, a plurality of concave pseudo defective portions 21 are formed integrally with the substrate 20 and aligned vertically and horizontally at intervals. As illustrated in Figs. 4(B) and 4(C), the pseudo defective portion 21 is formed in an inverted truncated cone shape in which an upper diameter (D3) is larger than a lower diameter (D4). Note that the shape of the concave portion of the pseudo defective portion 21 is not limited to the inverted truncated cone shape, and may be an inverted conical shape, a cylindrical shape, an inverted truncated pyramid shape, an inverted pyramid shape, a prism shape, or the like. However, the inverted truncated cone shape, which is more similar in appearance to a concave coating defect of the defect evaluation target, is desirable.

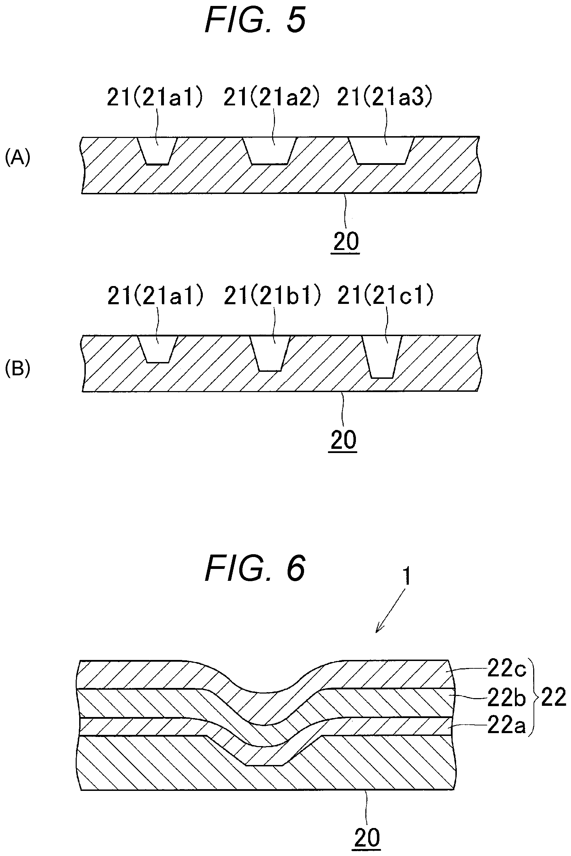

Fig. 5(A) is a sectional view of the substrate 21 of Fig. 4(A) taken along line VA-VA, and Fig. 5(B) is a sectional view of the substrate 21 of Fig. 4(A) taken along line VB-VB. In the present embodiment, as illustrated in Fig. 5(A), the pseudo defective portions 21 (for example, pseudo defective portions 21a1, 21a2, 21a3 ......) in a column (a row in the vertical direction in Fig. 4(A)) have the upper diameter D3 and the lower diameter D4 each increased from the distal end side (the upper side in Fig. 4(A)) toward the terminal end side (the lower side in Fig. 4(A)) in the column, while the maximum depth D5 of the pseudo defective portions 21 is constant. On the other hand, as illustrated in Fig. 5(B), the pseudo defective portions 21 (for example, pseudo defective portions 21a1, 21b1, 21c1 ......) in a row (a row in the right-left direction in Fig. 4(A)) have the constant upper diameter D3 and lower diameter D4, while the depth D5 of the pseudo defective portions 21 is increased from the distal end (the left side in Fig. 4(A)) toward the terminal end (the right side in Fig. 4(A)) in the row.

An example of dimensions of the upper diameter D3, the lower diameter D4, and the depth D5 of the pseudo defective portion 21 is represented in Table 2. In Table 2, 1 to 8 are row numbers, and are assigned in order from 1 from the upper side to the lower side in Fig. 4(A). Moreover, 'a' to `e' are column signs, and are assigned in order from a from the left side to the right side in Fig. 4(A).

**[Table 2]**

| | Upper dimeter D3 (mm) | Lower diameter D4 (mm) | | Maximum depth D5 (mm) | |
|---|---|---|---|---|---|
| 1 | 0.500 | 0.100 | | a | 0.020 |
| 2 | 0.646 | 0.129 | | b | 0.030 |
| 3 | 0.834 | 0.167 | | c | 0.045 |
| 4 | 1.078 | 0.216 | | d | 0.067 |
| 5 | 1.392 | 0.278 | | e | 0.100 |
| 6 | 1.798 | 0.360 | | | |
| 7 | 2.323 | 0.465 | | | |
| 8 | 3.000 | 0.600 | | | |

As understood from Table 2 above, the upper diameter D3 and the lower diameter D4 of the pseudo defective portions 21 in the column and the maximum depth D5 of the pseudo defective portions 21 in the row are all changed in a geometric progression manner. The change in a geometric progression manner allows a person to visually distinguish the difference among the pseudo defective portions 21 easily. As a result, with the comparison of the concave coating defect of the defect evaluation target with the pseudo defective portion 21 of the reference sample 1, it is possible to accurately evaluate the size or other properties of the concave coating defect occurred on the surface of the defect evaluation target.

Note that at least one of the upper diameter D3, the lower diameter D4, and the maximum depth D5 may be changed in a geometric progression manner. Alternatively, the inclination angle of the slope of the pseudo defective portion 21 may be changed in a geometric progression manner.

Similar to the substrate 11 illustrated in Fig. 1 and Fig. 2, the entire surface where the pseudo defective portion 21 is formed in the substrate 20 is coated, and as illustrated in Fig. 6, a coating film layer 22 covering the entire surface of one surface of the substrate 20 is formed. The coating film layer 22 has a three-layer structure of a primer layer 22a, a base layer 22b, and a clear layer 22c in order from the substrate 20 side. Note that the coating film layer 22 is desirably formed under the same coating conditions as those of the defect evaluation target, with the same coating material, layer structure, color, and thickness as those of the defect evaluation target, and the coating film layer 22 does not need to be formed on the entire surface of the substrate 20 and may be formed at least on the pseudo defective portion 21 and the peripheral portion thereof, similar to the case of the reference sample 1 having the convex pseudo defective portion 11 illustrated in Fig. 3.

The above-described embodiment has described the case where a plurality of pseudo defective portions 11, 21 are formed on the substrates 10 and 20, but at least one pseudo defective portion 11, 21 may be formed. Moreover, the reference sample 1 including only the convex pseudo defective portion 11 and the reference sample 1 including only the concave pseudo defective portion 21 have been described, but the reference sample 1 may include the convex pseudo defective portion 11 and the concave pseudo defective portion 21 in a mixed manner.

Next, a method for producing the reference sample 1 will be described.

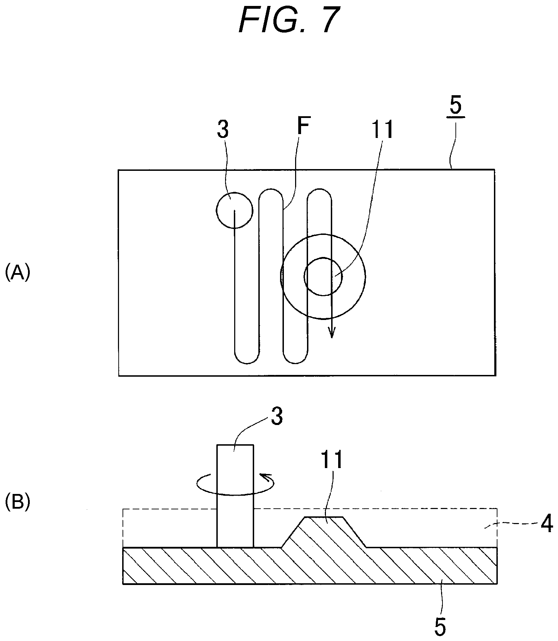

First, the substrate 10, 20 that has a surface on which one or a plurality of pseudo defective portions 11, 21 having a convex and/or concave shape are formed is produced. As one of the methods for producing the substrate 10, 20, there may be a method for producing the substrate 10, 20 by forming the pseudo defective portion 11, 21 by machining the surface of the substrate material 5 using a rotary mechanical tool (end mill) 3 or the like, as illustrated in Figs. 7(A) and 7(B). Figs. 7(A) and 7(B) illustrate the case where the convex pseudo defective portion 11 is formed, but the same applies to the case where the concave pseudo defective portion 21 is formed. The substrate material 5 may be metal or resin. In Fig. 7(B), a region 4 indicated by a broken line indicates a portion scraped by processing.

When at least the pseudo defective portions 11, 21 and the peripheral portions of the pseudo defective portions are processed in this machining, the tool 3 is linearly moved as indicated by an arrow F in Fig. 7(A). In addition, when the tool 3 is turned back in a U-shape at the end of the substrate material 5 where there is no influence on the pseudo defective portions 11, 21 and shifted to the next processing position, the tool 3 is moved in a direction parallel to the previous moving direction. By moving the tool 3 linearly and in parallel in this manner, a characteristic processing trace does not remain in the vicinity of the boundary between the pseudo defective portion 11, 21 and the peripheral portion thereof, thus enabling the coating defect reference sample 1 having the pseudo defective portion 11, 21 that is clean even when coating is performed.

In general, when the convex shape or the concave shape such as this pseudo defective portion is processed, the tool 3 is moved in a circular shape around the convex shape or the concave shape, and the tool 3 is moved linearly once the tool 3 is separated from the convex shape or concave shape. Such a moving method is a desirable method for reducing the shape error of the convex shape or the concave shape. However, in the production of the reference sample 1, the joint between the pseudo defective portion 11, 21 and the peripheral portion is important, and if the moving directions of the tool 3 intersects one another at this portion, a processing trace is generated easily. Therefore, the linear and parallel movement of the tool 3 is suitable.

As another method for producing the substrate 10, 20, there may be a method for producing a resin substrate using a mold. That is, a metal original plate having a recess corresponding to the convex pseudo defective portion 11 and a protrusion corresponding to the concave pseudo defective portion 21 is manufactured, and with this original plate as a mold, the resin substrate 10, 20 having the convex pseudo defective portion 11 or the concave pseudo defective portion 21 is produced by vacuum casting or injection molding. With this method, it is possible to efficiently produce a large number of resin substrates 10, 20, and thus a large number of reference samples 1.

Primer coating, base coating, and clear coating are sequentially performed on the surfaces where the pseudo defective portion 11, 21 is present in the thus produced substrate 10, 20 so as to obtain the reference sample 1 covered with the coating film layer 12, 22. Note that when the substrate 10, 20 is made of metal, electrodeposition coating is performed before primer coating, but there is little influence on the appearance of the pseudo defective portion 11, 21 because the thickness is considerably small.

Next, the definition of the defect diameter will be described.

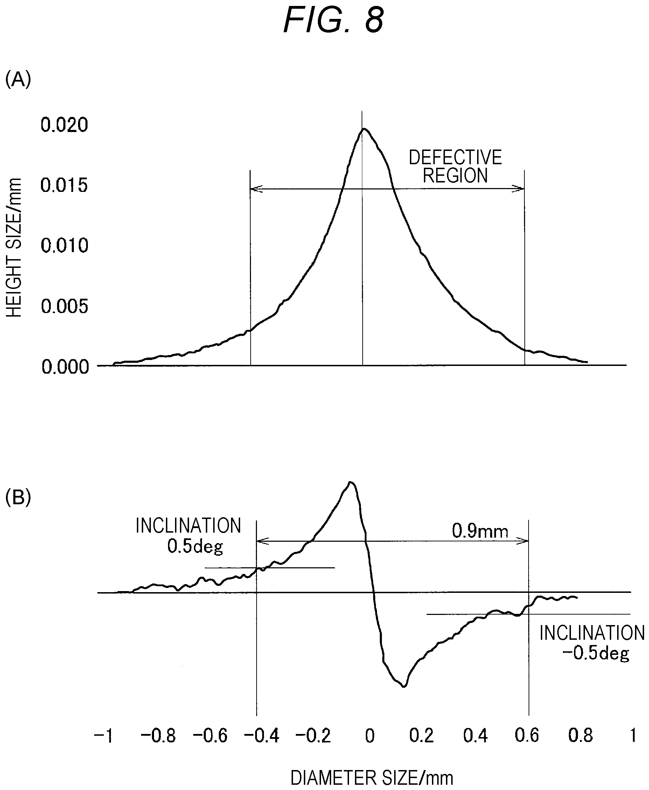

The inclination of the convex defect or the concave defect approaches 0 toward the periphery. Therefore, it is difficult to determine the extent of the defect and the defect diameter. Therefore, a protruding portion with a boundary on which an absolute value of inclination angle is 0.5 degrees in a section of the pseudo defective portion having a convex shape, or a recessed portion with a boundary on which an absolute value of inclination angle is 0.5 degrees in a section of the pseudo defective portion having a concave shape has been defined as a defective region, and thereby the inclination angle was determined as illustrated in Fig. 8.

Fig. 8(A) is a graph representing an outline of a vertical section of a certain convex defect, and Fig. 8(B) is a graph representing an inclination angle (may be also referred to as inclination) of each portion of the outline of Fig. 8(A). As represented in Fig. 8(B), a protruding range is defined as a defective region with an absolute value of inclination of 0.5 degrees (in the drawing, "degree" is indicated by "deg") as a reference. In the example of Fig. 8, the diameter of the defect is about 0.9 mm.

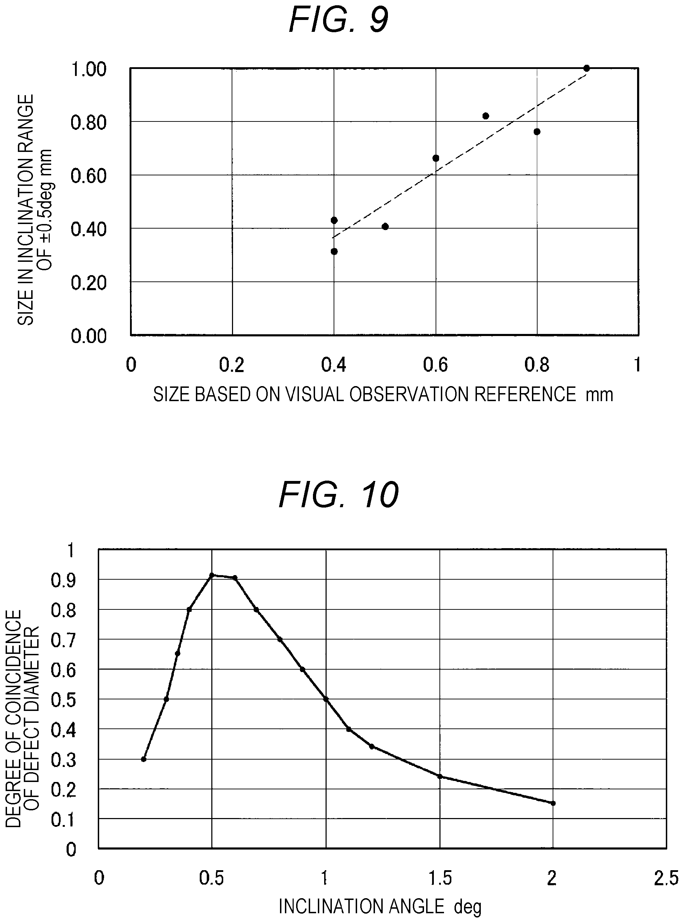

Fig. 9 is a graph representing a comparison between the size of the defect according to the above-described definition and the size of the defect based on a visual observation reference, in which the vertical axis indicates the size of the defect defined by an absolute value of inclination of 0.5 degrees (±0.5 degrees) and the horizontal axis indicates the size of the defect based on a visual observation reference, and it is found that both have a high correlation.

Fig. 10 is a graph formed by examining the change in degree of coincidence with a visual observation reference when this inclination is changed in a range of ±0.2 deg to ±2 deg, in which the vertical axis indicates the degree of coincidence, and the horizontal axis indicates inclination. From the graph of Fig. 10, it can be said that the correlation with visual observation is the highest when the inclination is 0.5 deg, and the correlation with visual observation is relatively high when the inclination is in the range of ±0.3 deg to ±1.0 deg.

The matters described with reference to Figs. 8 to 10 apply similarly to the concave defect.

For this reason, it is desirable to determine the defective regions of the pseudo defective portions 11, 21 on the basis of the inclination angle in the section of the pseudo defective portions 11, 21 in the point that the size of the pseudo defective portion 11, 21 can be scaled to the human visual observation reference. In particular, it is most desirable that, in a section of the pseudo defective portion 11 having a convex shape, a protruding portion with a boundary on which an absolute value of inclination angle is 0.5 degrees is defined as a defective region, and in a section of the pseudo defective portion 21 having a concave shape, a recessed portion with a boundary on which an absolute value of inclination angle is 0.5 degrees is defined as a defective region. However, whether the portion is a defective region may be defined with not a boundary of an absolute value of 0.5 degrees, but a boundary of an absolute value within a range of 0.3 to 1.0 degrees.

In addition, orange peel, as noise unavoidable in production, occurs on a painted surface of a product such as an automobile. Therefore, it is desirable to generate orange peel also on the surface of the coating film layer of the reference sample 1 because the coating defect of the defect evaluation target can be reproduced more accurately. In this case, similarly to the orange peel of the defect evaluation target, the inclination angle of the orange peel is preferably larger than 1/2 of the inclination angles of the pseudo defective portion 11, 21.

As described above, the reference sample 1 according to this embodiment includes the substrate 10, 20 that has the surface on which one or the plurality of pseudo defective portions 11, 21 having a convex and/or concave shape are formed; and the coating film layer 12, 22 that is formed to cover at least the pseudo defective portion 11, 21 and the peripheral portion of the pseudo defective portion 11, 21. Thus, the pseudo defective portion 11, 21 covered with the coating film layer 22 has the same appearance as the convex or concave coating defect generated on the surface of the defect evaluation target such as a coated product, and the size or other properties of the coating defect of the defect evaluation target can be easily and appropriately evaluated by comparison with the reference sample 1.

This application claims the priority of Japanese Patent Application No. 2021-121485 filed on July 26, 2021, the disclosure of which is incorporated herein by reference.

### Industrial Applicability

The present invention can be used for evaluating the size or other properties of a convex and/or concave coating defect occurred on a coated surface of a product such as an automobile, for example.

### Reference Signs List

1 reference sample for coating defect
10, 20 substrate
11 (11a1 to 11a3, 11b1, 11c1) convex pseudo defective portion
21 (21a1 to 21a3, 21b1, 21c1) concave pseudo defective portion
3 tool
4 processing portion
12, 22 coating film layer
12a, 22a primer layer
12b, 22b base layer
12c, 22c clear layer

## Claims

1. A reference sample for coating defects, comprising: a substrate that has a surface on which one or a plurality of pseudo defective portions having a convex and/or concave shape are formed; and a coating film layer that is formed to cover at least the pseudo defective portion and a peripheral portion of the pseudo defective portion.

2. The reference sample for coating defects according to claim 1, wherein the coating film layer is formed of a coating material same as a coating material used for a defect evaluation target.

3. The reference sample for coating defects according to claim 1, wherein color of the coating film layer is same as color of a coating material used for a defect evaluation target.

4. The reference sample for coating defects according to any one of claims 1 to 3, wherein the pseudo defective portion includes a plurality of pseudo defective portions for which at least one of a diameter, a height and/or a depth, and an inclination angle in plan view is different.

5. The reference sample for coating defects according to claim 4, wherein at least one of a diameter, a height and/or a depth, and an inclination angle in plan view is changed in a geometric progression manner among the plurality of pseudo defective portions.

6. The reference sample for coating defects according to any one of claims 1 to 5, wherein a defective region of the pseudo defective portion is determined based on an inclination angle in a section of the pseudo defective portion.

7. The reference sample for coating defects according to claim 6, wherein, in a section of the pseudo defective portion having a convex shape, a protruding portion with a boundary on which an absolute value of inclination angle is 0.5 degrees is defined as a defective region, and in a section of the pseudo defective portion having a concave shape, a recessed portion with a boundary on which an absolute value of inclination angle is 0.5 degrees is defined as a defective region.

8. A method for producing a reference sample for coating defects, comprising: producing a substrate that has a surface on which one or a plurality of pseudo defective portions having a convex and/or concave shape are formed; and coating at least the pseudo defective portion and a peripheral portion of the pseudo defective portion.

9. The method for producing a reference sample for coating defects according to claim 8, wherein the pseudo defective portion is formed by machining a substrate.

10. The method for producing a reference sample for coating defects according to claim 9, wherein the pseudo defective portion is processed by moving a tool linearly and by moving the tool in a direction parallel to a previous moving direction when the tool is shifted to a next processing position.

11. The method for producing a reference sample for coating defects according to claim 8, wherein a resin substrate that has a surface on which one or a plurality of pseudo defective portions having a convex and/or concave shape are formed is produced by resin molding using a mold that has a surface on which one or a plurality of concave and/or convex portions for forming a pseudo defect.
